# FASCICULE DE BREVET EUROPEEN

(11) **EP 2 093 372 B1**
(45) Date de publication et mention de la délivrance du brevet: **26.07.2017**
(21) Numéro de dépôt: 09153352.1
(22) Date de dépôt: 20.02.2009
(51) Int. Cl.: E06B 9/322, E06B 9/68, G05B 19/042

(54) **Procédé de fonctionnement d'une unité de commande d'un actionneur électromécanique de manoeuvre d'un écran mobile**
Betriebsverfahren einer Steuerungseinheit eines elektomechanischen Betätigungsglieds für die Bedienung eines Schutzschirms
Operating method of a control unit of an electromechanical actuator for the handling of a movable screen

(30) Priorité: 22.02.2008 FR 0800988
(43) Date de publication de la demande: 26.08.2009
(73) Titulaire: Somfy SAS, 74300 Cluses (FR)
(72) Inventeur: Schoen, Hendrik, 5096, Bergen (NO)
(74) Mandataire: Bugnion Genève

(56) Documents cités:
- EP-A- 1 304 442
- DE-U1- 29 809 684

## Description

L'invention concerne le domaine des écrans de fermeture motorisés, et en particulier les volets roulants à lames orientables, utilisés souvent pour occulter des fenêtres de toit dans un bâtiment. Elle concerne en particulier un procédé de fonctionnement d'une unité de commande d'un actionneur électromécanique de manoeuvre d'un écran mobile. Elle concerne aussi une unité de commande fonctionnant selon un tel procédé. Elle concerne également une installation domotique d'écran motorisé comprenant une telle unité de commande.

Les volets du type roulant à lames orientables comprennent des lames liées les unes aux autres et coulissant le long de deux rails latéraux sous l'action d'un actionneur tubulaire comprenant un moteur électrique. Dans une première position dite de fin de course haute, les lames sont enroulées autour d'un tube d'enroulement dans lequel se situe l'actionneur. Lorsque le moteur fait tourner le tube d'enroulement, le volet se déploie vers une deuxième position dite de fin de course basse. Dans une troisième position, les lames ont la possibilité de basculer suivant leur axe longitudinal pour permettre une ouverture partielle du volet. Cette troisième position se situe généralement dans une zone proche de la deuxième position de fin de course basse. Le volet est ainsi complètement déployé le long des rails, mais l'orientation des lames permet de contrôler l'entrée des rayons lumineux dans la pièce.

La position du volet étant contrôlée par l'intermédiaire de l'actionneur, celui-ci comprenant une unité de commande permettant de gérer les mouvements et l'arrêt du moteur, il est également possible de prendre en compte des données extérieures pour le pilotage automatique du volet, fournies par des automatismes. Par exemple, un capteur de données météorologique peut être associé à l'actionneur pour commander les mouvements du volet en fonction du soleil, du vent, de la température, etc. Une horloge peut également être associée à l'actionneur pour commander automatiquement des mouvements en fonction d'horaires prédéfinis.

L'actionneur répond également à des commandes issues d'un point de commande tel qu'une télécommande, actionnée par un utilisateur.

De l'état de l'art, on connaît de la demande de brevet EP 1 304 442 un procédé de fonctionnement pour une unité de commande d'un actionneur destiné à manoeuvrer une porte de garage. L'actionneur est commandé au moyen d'un appareil de contrôle muni d'un interrupteur qui transmet jusqu'à l'actionneur les informations destinées à commander l'ouverture ou la fermeture de la porte. Lorsqu'une commande destinée à l'ouverture ou la fermeture de la porte est reçue par l'actionneur, ce dernier détermine si une pression momentanée ou continue est appliquée sur l'interrupteur. S'il est déterminé que l'utilisateur applique uniquement une pression momentanée sur l'interrupteur, l'actionneur permet au moteur d'exercer un couple normal. En revanche, s'il est déterminé que l'utilisateur applique une pression continue sur l'interrupteur, l'actionneur permet alors au moteur d'exercer un couple plus important. Le procédé, cependant, ne permet pas de signaler à l'utilisateur l'existence d'une situation à risque.

On connaît également du document DE 298 09 684U un volet roulant motorisé pour fenêtre de toit pour lequel un capteur de température est prévu. Le capteur de température est couplé avec un thermocontact de sorte que pour une température ambiante inférieure à un seuil donné, l'alimentation du moteur est coupée. De la sorte, le mouvement du volet est bloqué pour les basses températures, ce qui évite une surchauffe du moteur si les lames sont gelées et ne peuvent être manoeuvrées. Un dispositif de débrayage est prévu pour que le volet puisse être manoeuvré manuellement, malgré le blocage du moteur à basse température.

Ainsi, si le capteur détecte une situation à risque de gel, tout mouvement à partir d'une commande provenant d'un automatisme ou d'une télécommande est bloqué, protégeant ainsi le volet et le moteur. Cependant, le blocage automatique de tout mouvement peut s'avérer trop contraignant.

La demande de brevet EP 1 816 308 décrit également des options de blocage des mouvements associés à certaines fonctions de commande en cas de gel. En particulier, pour des températures ambiantes inférieures à 4°C, le moteur autorise seulement les mouvements d'ouverture et de fermeture du volet, mais bloque le mouvement d'orientation des lames, ceci afin de protéger le moteur et le volet de cas d'actionnement dans des conditions de gel.

Le blocage sélectif de certaines fonctions critiques permet une gestion plus flexible, mais cela exige que la relation entre les données du capteur et le risque de dommages soit parfaitement maîtrisée. Cette relation doit en plus intégrer quelles fonctions sont critiques et dans quelle mesure elles le sont. Si la relation n'est pas maîtrisée, le fonctionnement est dégradé par précaution dans des cas où l'utilisateur pourrait souhaiter actionner la commande du volet.

Le but de l'invention est de fournir un procédé de fonctionnement remédiant à ces inconvénients et améliorant les procédés de fonctionnement connus de l'art antérieur. En particulier, l'invention propose un procédé de fonctionnement permettant une gestion flexible des cas pour lesquels un actionnement motorisé risque d'endommager l'écran ou l'actionneur, tout en laissant à l'utilisateur la possibilité de commander la manoeuvre de l'écran comme il le souhaite.

Le procédé selon l'invention régit le fonctionnement d'une unité de commande d'un actionneur électromécanique de manoeuvre d'un écran mobile, l'unité de commande comprenant un moyen de détermination d'un indice de risque lié à la manoeuvre de l'écran. Le procédé comprend un premier mode de fonctionnement, dit d'alerte et au moins défini par une condition sur l'indice de risque. Il est caractérisé en ce que l'unité de commande comprend également un moyen d'émission d'un signal d'alerte, et en ce que, dans le premier mode de fonctionnement, un ordre de commande de mouvement de l'actionneur donne lieu à une réaction de l'unité de commande en fournissant un signal d'alerte par le biais du moyen d'émission, signifiant que l'ordre de commande de mouvement doit être confirmé par l'utilisateur pour être exécuté par l'actionneur.

L'unité de commande peut basculer d'un deuxième mode de fonctionnement au premier mode de fonctionnement lorsque l'indice de risque franchit une valeur seuil prédéterminée.
L'indice de risque peut être déterminé sur la base d'une mesure de l'intensité d'un paramètre ambiant.
L'indice de risque peut être déterminé sur la base d'une détection de gel et/ou de neige et/ou de givre.
L'indice de risque peut être déterminé sur la base d'une détection de température et/ou d'humidité.

Le signal d'alerte peut signifier à l'utilisateur que l'ordre de commande de mouvement émis ne peut être exécuté temporairement.

Une confirmation de l'ordre de commande de mouvement par l'utilisateur peut comprendre l'émission d'un signal de commande déclenché par une première action de l'utilisateur, cette première action étant différente d'une deuxième action déclenchant le même ordre de commande de mouvement lorsque le premier mode de fonctionnement n'est pas actif.

Les ergonomies des première et deuxième actions peuvent être différentes.

Pour être prise en compte, une confirmation de l'ordre de commande de mouvement par l'utilisateur peut intervenir après une période de temps prédéfinie.

A réception d'une confirmation de l'ordre de commande de mouvement par l'utilisateur, l'unité de commande peut traiter celle-ci et provoquer l'exécution de la commande associée.
Un message d'alerte préventif peut être émis lors de l'entrée dans le premier mode de fonctionnement.

Selon l'invention, une unité de commande d'un actionneur électromécanique de manoeuvre d'un écran mobile comprend des moyens matériels et/ou logiciels de mise en oeuvre du procédé de fonctionnement défini précédemment. L'unité de commande comprend notamment un moyen de détermination d'un indice de risque lié à la manoeuvre de l'écran et un moyen d'émission d'un signal d'alerte.

Selon l'invention, une installation d'écran motorisé comprend une unité de commande définie précédemment.
Le dessin annexé représente, à titre d'exemple, un mode d'exécution du procédé de fonctionnement selon l'invention.
La figure 1 est un schéma d'une installation domotique de manoeuvre motorisé d'un écran mobile comprenant une unité de commande fonctionnant selon un mode d'exécution du procédé de fonctionnement objet de l'invention.
La figure 2 est un schéma représentant la cinématique des lames de l'écran mobile.
Les figures 3a et 3b sont des schémas illustrant le fonctionnement de deux variantes d'écran mobile à lames orientables.
La figure 4 est un ordinogramme d'un mode d'exécution du procédé de fonctionnement selon l'invention.

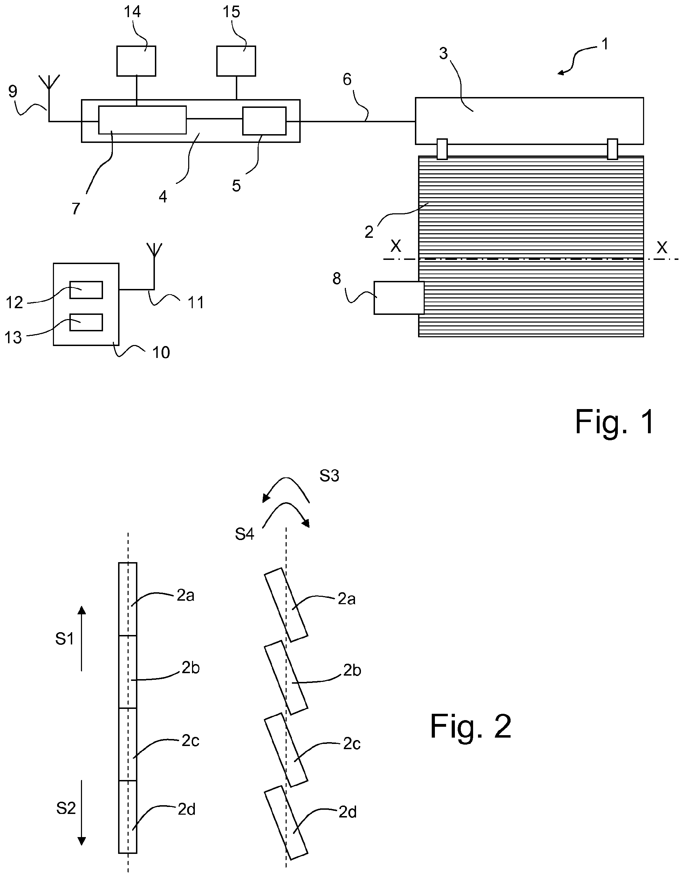

La figure 1 décrit une installation 1 d'écran mobile équipant un bâtiment, comprenant un écran 2 venant s'enrouler sur un tube d'enroulement 3 dans lequel est installé un actionneur tubulaire électromécanique 4 (pour simplifier l'actionneur est représenté hors du tube sur la figure 1). L'actionneur comprend un moteur 5 et des éléments mécaniques (représentés par la liaison 6) permettant l'entraînement du tube d'enroulement 3 et le déplacement de l'écran dans un premier sens S1 et dans un deuxième sens S2 lorsque le moteur tourne dans un premier sens et dans un deuxième sens.

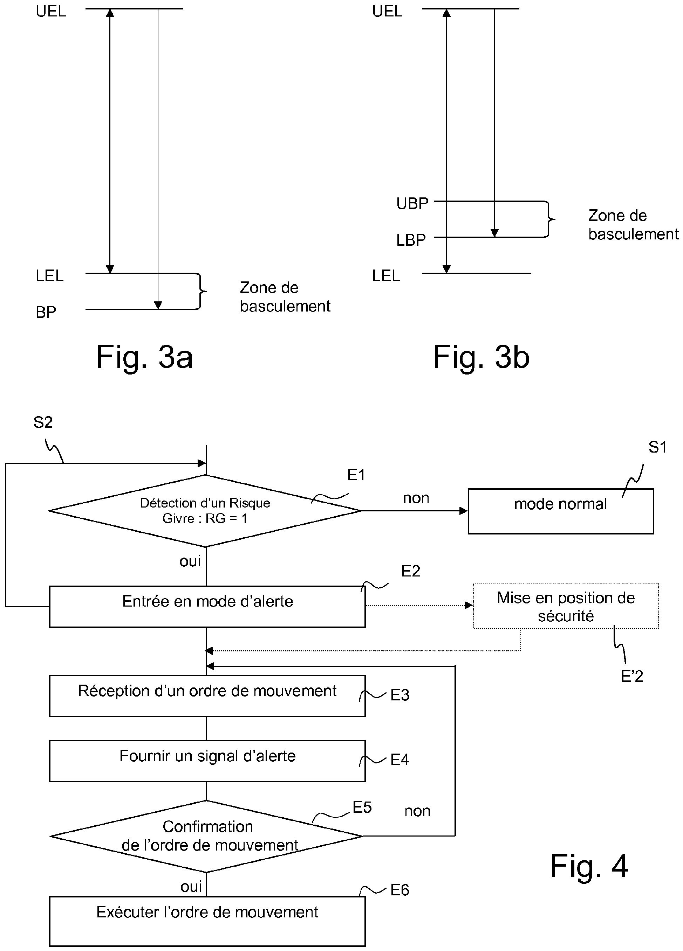

L'écran ainsi que représenté à la figure 2 comprend une pluralité de lames 2a-2d adjacentes les unes aux autres et un mécanisme de basculement 8 de ces lames suivant leur axe longitudinal XX. Ce mécanisme 8 est mis en oeuvre lorsque l'écran s'est déployé jusqu'à une position particulière de basculement ou d'orientation des lames BP. Les différentes positions caractéristiques du déplacement de l'écran sont représentées aux figures 3a et 3b. L'écran mobile peut notamment être un volet.

Dans un premier mode de réalisation, la position de basculement BP peut être située en dehors de la zone de position s'étendant entre une position de fin de course basse LEL et une position de fin de course haute UEL.

L'entraînement du volet vers cette position particulière de basculement BP est notamment possible sur instruction particulière émise vers l'unité de commande de l'actionneur, différente d'une commande d'ouverture ou de fermeture du volet. Cette instruction particulière peut être une commande de mouvement vers une position prédéfinie équivalente à la position de basculement.

Dans un deuxième mode de réalisation, une position basse de basculement LBP et une position haute de basculement UBP peuvent être prévues entre les positions de fin de course basse LEL et une position de fin de course haute UEL. Dans ce cas, le basculement des lames est réalisé à partir du moment où le volet est directement conduit vers une de ces positions, par exemple la position basse de basculement LBP et non pas nécessairement lorsque le volet, lors d'un mouvement d'ouverture-fermeture, passe simplement au niveau de ces positions. La position à atteindre est alors équivalente à la position unique de basculement décrite ci-dessus, elle peut être atteinte par une instruction particulière de mouvement vers cette position prédéfinie.

A partir de cette position de basculement des lames et dans une zone de basculement correspondante, il est possible de commander de petits mouvements de l'actionneur dans les sens S3 et S4 représentés à la figure 2 pour contrôler l'angle d'orientation des lames.

L'actionneur comprend également une unité de commande 7. Celle ci permet de gérer les mouvements et la position de l'écran 2. L'unité de commande peut être intégrée à l'actionneur et éventuellement comprendre des moyens 9 de communication notamment un récepteur d'ondes radiofréquences.

L'installation 1 comprend également un point de commande 10 tel qu'une télécommande, comprenant un moyen 11 d'émission d'ordres de commande, notamment d'ordres de commande de mouvement, une interface IHM 12 permettant à un utilisateur de commander certains mouvements au moyen d'appuis spécifiques sur des touches ou par d'autres moyens de saisie, conformément à des ergonomies prédéfinies. En particulier, quatre ergonomies disponibles au niveau du point de commande permettent de commander en mode de fonctionnement normal, une ouverture du volet, une fermeture du volet, un mouvement vers une position prédéfinie (position de basculement) et un ajustement fin de l'orientation des lames. Le point de commande comprend également un afficheur 13, tel qu'une ou plusieurs diodes lumineuses ou un écran.

L'unité de commande comprend également un ou des moyens 14, 15 de détermination de l'intensité d'un paramètre ambiant. Ces moyens peuvent en particulier être des capteurs pouvant communiquer avec les autres moyens composant l'unité de commande, soit par une liaison filaire, soit sans fil, par exemple par ondes radio. Les capteurs sont par exemple des capteurs de température, d'humidité, de givre ou de gel ou d'une combinaison de ces paramètres. Le capteur fournit à l'unité de commande une information dépendante du ou des paramètres mesurés, par exemple directement la mesure ou un ordre de mouvement associé. L'unité de commande détermine sur la base de cette information un indice de risque lié à l'actionnement du volet. La détermination de l'indice de risque peut également être traitée directement par le ou les capteurs.

Un volet roulant à lames orientables est particulièrement fragile et sensible à des conditions de gel qui peuvent bloquer l'orientation des lames ou le déroulement du volet, comme cela est explicité dans les documents de l'art antérieur précités. L'exemple suivant concerne donc un capteur destiné à détecter des situations à risque de gel. Plus généralement, le capteur est utilisé pour déterminer des situations dans lesquelles il existe un risque d'endommagement de l'installation, en particulier lié à des conditions de manoeuvre de l'écran.

En fonction de cet indice de risque, l'actionneur réagit par l'exécution d'un ordre de commande de mouvement ou par un autre comportement approprié.

Le capteur peut également fournir cette information au point de commande 10, en particulier dans le cas de communications radio bidirectionnelles.

L'unité de commande comprend des moyens matériels et/ou logiciels de mise en oeuvre des étapes essentielles du procédé de fonctionnement objet de l'invention. Elle comprend notamment un premier module régissant le fonctionnement de l'unité de commande selon un premier mode et un deuxième module régissant le fonctionnement de l'unité de commande selon un deuxième mode. Ces modules sont par exemple de type logiciel et mettent en oeuvre différents programmes informatiques. L'unité de commande comprend un moyen de test d'au moins une condition portant sur un indice de risque et un moyen d'activation de l'un ou l'autre des premier et deuxièmes modules en fonction du résultat de ce test. L'unité de commande comprend aussi un moyen d'émission d'un signal d'alerte et un moyen d'exécution d'un ordre de commande lorsque celui-ci est confirmé par l'utilisateur.

Conformément à l'invention, l'installation décrite est capable de fonctionner suivant un procédé dans lequel, en cas de risque de gel, une partie ou l'ensemble des fonctions liées à la commande est bloqué dans un premier temps et un retour d'information lié à ce blocage est fourni à l'utilisateur.

Le procédé selon l'invention est décrit en relation avec la figure 4.

Au cours d'une étape E1, un risque de gel est vérifié, ce qui se traduit par une indication RG de risque de gel prenant soit un état 0 (absence de risque) ou un état 1 (risque présent). Ce risque est géré soit par le capteur lui-même, soit par l'unité de commande qui détermine en fonction de l'information fournie par le capteur ou plus généralement par le moyen de détermination de l'indice de risque si un risque est présent. Un risque de gel peut par exemple être déterminé lorsque la température ambiante passe en dessous d'un seuil (par exemple en-dessous de 4°C pour un capteur placé dans un caisson d'enroulement de volet roulant).

En l'absence de ce risque de gel, l'unité de commande est dans un mode de fonctionnement dit normal (étape S1), dans lequel elle répond aux différentes commandes provenant du point de commande ou d'un autre automatisme (par exemple lié à une horloge) par la mise en oeuvre des mouvements associés aux commandes.

Lorsqu'un risque de gel est établi (RG = 1), l'unité de commande passe alors (étape E2) dans un mode de fonctionnement dit d'alerte pour lequel lorsqu'un ordre de commande est émis au cours d'une étape E3, l'unité de commande réagit en fournissant un signal d'alerte au cours d'une étape E4 sans exécuter l'ordre de commande.

Ce signal d'alerte peut être visuel, sonore, se situer au niveau du volet ou au niveau du point de commande. En particulier, un léger mouvement du volet peut constituer ce signal d'alerte si le volet se trouve dans une position de mouvement d'ouverture-fermeture. Un positionnement du volet dans une position lames fermées ou une position hors de la zone de basculement, si celui-ci est, au moment de l'étape E3, dans une position de la zone de basculement, peut également constituer le signal d'alerte. La commande de mouvement donnée au cours de l'étape E3 n'est pas prise en compte. Elle peut être mise en mémoire pour un usage ultérieur, comme explicité ci-dessous.

En fonction de ce signal d'alerte, l'utilisateur peut décider de ne pas mettre en oeuvre la commande, s'il juge que les conditions sont en effet délicates. Il peut au contraire choisir de renouveler sa commande pour la mettre en oeuvre malgré l'alerte donnée par l'installation. Dans ce cas, il confirme l'ordre de mouvement au cours d'une étape E5. La commande est alors prise en compte par l'unité de commande et le mouvement est mis en oeuvre par l'actionneur.

Lors de l'étape E5 au cours de laquelle l'utilisateur confirme sa commande, celle-ci peut présenter une forme de commande forcée, c'est à dire que l'ergonomie de commande forcée de l'actionneur est différente de l'ergonomie de commande prise en compte dans le mode de fonctionnement normal. Par exemple, cette ergonomie forcée peut prendre la forme d'une commande de type "homme mort", au cours de laquelle il est nécessaire que l'utilisateur maintienne les touches de commande appuyées pour la poursuite d'un mouvement, alors qu'en mode normal, un simple appui non maintenu suffit à lancer la commande et le mouvement. Ainsi, l'utilisateur est doublement alerté de la situation anormale et peut réagir rapidement, par arrêt de l'appui en cours, s'il constate un dysfonctionnement de son installation.

Cette commande homme-mort est avantageusement mise en oeuvre après une période de temps d'appui prédéterminée au cours de laquelle il n'y a aucun mouvement. Le temps de réponse prolongé entre la commande et son exécution est donc également un nouveau signal d'alerte.

Avantageusement, la commande forcée n'est prise en compte que si elle correspond à l'ordre émis au cours de l'étape E3 et mémorisé.

Ces dispositions ont pour but de limiter les mouvements du volet dans une situation avec risque de gel. En particulier, si l'actionneur est piloté également depuis un automatisme, il est important que cet automatisme ne puisse plus commander l'écran en cas de risque de gel. Le procédé selon l'invention permet à l'utilisateur de prendre la mesure du risque lié à l'actionnement du volet et des ergonomies spécifiques lui permettent de cependant mettre en oeuvre les fonctions qu'il souhaite réellement.

L'invention permet de ne pas avoir à distinguer des fonctions de base et des fonctions critiques comme c'est le cas dans l'art antérieur, tout en laissant à l'utilisateur le soin de décider s'il met en oeuvre une commande ou non.

Par sécurité, un deuxième seuil peut être prévu. En dessous de ce deuxième seuil, le retour d'information peut être prévu mais les commandes forcées ne sont plus prises en compte par l'actionneur.

La sortie du mode d'alerte (étape S2) est possible dès que l'indicateur de risque de gel repasse à l'état 0, c'est à dire par exemple lorsque le capteur détecte une température supérieure au seuil prédéfini.

Il peut être prévu de manière supplémentaire qu'un mouvement du volet soit activé dès que le risque de gel apparaît, et donc avant l'apparition d'une commande. Ce mouvement du volet peut être, comme dans l'état de l'art, un retour à une position de sécurité, par exemple en dehors de la zone de basculement des lames. Cette étape est illustrée en traits pointillés à la figure 4 par l'étape E'2.

Alternativement ou additionnellement à des ergonomies différentes, il peut être prévu une temporisation obligatoire entre la première commande (étape E3) et la commande confirmée (étape E5). Ainsi, des appuis de commande se succédant de manière trop rapprochés ne sont pas pris en compte. De nouveau, cette disposition permet de protéger l'installation et d'éviter certains mouvements liés à une méconnaissance par l'utilisateur du fonctionnement de son installation.

Il se peut également que l'étape E1 de détermination du risque suive l'étape E3 de réception d'un ordre de commande.

Alternativement, dans le cas où il est possible de distinguer la provenance de la commande et que la commande prévue à l'étape E3 soit fournie par un utilisateur, la confirmation de la commande de l'étape E5 peut également être une absence de réaction, la commande étant mise en oeuvre, éventuellement avec un retard correspondant au signal d'alerte, en l'absence d'infirmation de celle-ci par l'utilisateur.

## Revendications

1. Procédé de fonctionnement d'une unité de commande (7) d'un actionneur électromécanique (4) de manoeuvre d'un écran mobile (2), l'unité de commande comprenant un moyen (14) de détermination d'un indice de risque lié à la manoeuvre de l'écran (2), le procédé comprenant un premier mode de fonctionnement, dit d'alerte et au moins défini par une condition sur l'indice de risque, **caractérisé en ce que** l'unité de commande (7) comprend également un moyen d'émission d'un signal d'alerte, et **en ce que**, dans le premier mode de fonctionnement, un ordre de commande de mouvement de l'actionneur (4) donne lieu à une réaction de l'unité de commande (7) en fournissant un signal d'alerte par le biais du moyen d'émission, signifiant que l'ordre de commande de mouvement doit être confirmé par l'utilisateur pour être exécuté par l'actionneur (4).

2. Procédé de fonctionnement selon la revendication 1, **caractérisé en ce que** l'unité de commande (7) bascule d'un deuxième mode de fonctionnement au premier mode de fonctionnement lorsque l'indice de risque franchit une valeur seuil prédéterminée.

3. Procédé de fonctionnement selon la revendication 1 ou 2, **caractérisé en ce que** l'indice de risque est déterminé sur la base d'une mesure de l'intensité d'un paramètre ambiant.

4. Procédé de fonctionnement selon l'une des revendications précédentes, **caractérisé en ce que** l'indice de risque est déterminé sur la base d'une détection de gel et/ou de neige et/ou de givre.

5. Procédé de fonctionnement selon l'une des revendications précédentes, **caractérisé en ce que** l'indice de risque est déterminé sur la base d'une détection de température et/ou d'humidité.

6. Procédé de fonctionnement selon l'une des revendications précédentes, **caractérisé en ce que** le signal d'alerte signifie à l'utilisateur que l'ordre de commande de mouvement émis ne peut être exécuté temporairement.

7. Procédé de fonctionnement selon l'une des revendications précédentes, **caractérisé en ce qu'**une confirmation de l'ordre de commande de mouvement par l'utilisateur comprend l'émission d'un signal de commande déclenché par une première action de l'utilisateur, cette première action étant différente d'une deuxième action déclenchant le même ordre de commande de mouvement lorsque le premier mode de fonctionnement n'est pas actif.

8. Procédé de fonctionnement selon la revendication précédente, **caractérisé en ce que** les ergonomies des première et deuxième actions sont différentes.

9. Procédé de fonctionnement selon l'une des revendications précédentes, **caractérisé en ce que**, pour être prise en compte, une confirmation de l'ordre de commande de mouvement par l'utilisateur intervient après une période de temps prédéfinie.

10. Procédé de fonctionnement selon l'une des revendications précédentes, **caractérisé en ce qu'**à réception d'une confirmation de l'ordre de commande de mouvement par l'utilisateur, l'unité de commande traite celle-ci et provoque l'exécution de la commande associée.

11. Procédé de fonctionnement selon l'une des revendications précédentes, **caractérisé en ce qu'**un message d'alerte préventif est émis lors de l'entrée dans le premier mode de fonctionnement.

12. Unité (7) de commande d'un actionneur (4) électromécanique de manoeuvre d'un écran mobile comprenant des moyens matériels et/ou logiciels, notamment un moyen de détermination (14) d'un indice de risque lié à la manoeuvre de l'écran et un moyen d'émission d'un signal d'alerte, de mise en oeuvre du procédé de fonctionnement selon l'une des revendications précédentes.

13. Installation (1) d'écran motorisé comprenant une unité de commande (7) selon la revendication précédente.

## Patentansprüche

1. Betriebsverfahren einer Steuerungseinheit (7) eines elektromechanischen Betätigungsglieds (4) für die Bedienung eines bewegbaren Schirms (2), wobei die Steuerungseinheit ein Bestimmungsmittel (14) eines Risikoindexes in Verbindung mit der Bedienung des Schirms (2) umfasst, wobei das Verfahren einen ersten Warn-Betriebsmodus umfasst und mindestens definiert von einer Risikoindexbedingung, **dadurch gekennzeichnet, dass** die Steuerungseinheit (7) ebenfalls ein Sendemittel eines Warnsignals umfasst und dass im ersten Betriebsmodus ein Bewegungssteuerungsbefehl des Betätigungsglieds (4) eine Reaktion der Steuerungseinheit (7) durch Bereitstellen eines Warnsignals über das Sendemittel veranlasst, was bedeutet, dass der Bewegungssteuerungsbefehl von dem Benutzer zu betätigen ist, um von dem Betätigungsglied (4) ausgeführt zu werden.

2. Betriebsverfahren nach Anspruch 1, **dadurch gekennzeichnet, dass** die Steuerungseinheit (7) von einem zweiten Betriebsmodus in den ersten Betriebsmodus wechselt, wenn der Risikoindex einen vorbestimmten Grenzwert überschreitet.

3. Betriebsverfahren nach Anspruch 1 oder 2, **dadurch gekennzeichnet, dass** der Risikoindex auf der Basis einer Messung der Intensität eines Umgebungsparameters bestimmt wird.

4. Betriebsverfahren nach einem der vorangehenden Ansprüche, **dadurch gekennzeichnet, dass** der Risikoindex auf der Basis einer Detektion von Frost und/oder von Schnee und/oder von Vereisung bestimmt wird.

5. Betriebsverfahren nach einem der vorangehenden Ansprüche, **dadurch gekennzeichnet, dass** der Risikoindex auf der Basis einer Temperatur- und/oder Feuchtigkeitsdetektion bestimmt wird.

6. Betriebsverfahren nach einem der vorangehenden Ansprüche, **dadurch gekennzeichnet, dass** das Warnsignal dem Benutzer anzeigt, dass der gesendete Bewegungssteuerungsbefehl temporär nicht ausführbar ist.

7. Betriebsverfahren nach einem der vorangehenden Ansprüche, **dadurch gekennzeichnet, dass** eine Bestätigung des Bewegungssteuerungsbefehls durch den Benutzer das Senden eines Steuerungssignals, ausgelöst durch eine erste Aktion des Benutzers, umfasst, wobei diese erste Aktion von einer zweiten Aktion unterschiedlich ist, welche denselben Bewegungssteuerungsbefehl auslöst, wenn der erste Betriebsmodus nicht aktiv ist.

8. Betriebsverfahren nach vorangehendem Anspruch, **dadurch gekennzeichnet, dass** die Ergonomien der ersten und zweiten Aktion unterschiedlich sind.

9. Betriebsverfahren nach einem der vorangehenden Ansprüche, **dadurch gekennzeichnet, dass**, um berücksichtigt zu werden, eine Bestätigung des Bewegungssteuerungsbefehls durch den Benutzer nach einem vorbestimmten Zeitraum erfolgt.

10. Betriebsverfahren nach einem der vorangehenden Ansprüche, **dadurch gekennzeichnet, dass** bei Empfang einer Bestätigung des Bewegungssteuerungsbefehls durch den Benutzer die Steuerungseinheit diese verarbeitet und die Ausführung der zugeordneten Steuerung veranlasst.

11. Betriebsverfahren nach einem der vorangehenden Ansprüche, **dadurch gekennzeichnet, dass** beim Eintritt in den ersten Betriebsmodus eine präventive Warnmeldung ausgegeben wird.

12. Steuerungseinheit (7) eines elektromechanischen Betätigungsglieds (4) für die Bedienung eines bewegbaren Schirms, umfassend Hard- und/oder Softwaremittel, insbesondere ein Bestimmungsmittel (14) eines Risikoindexes in Verbindung mit der Bedienung des Schirms und ein Sendemittel eines Warnsignals, der Umsetzung eines Betriebsverfahrens nach einem der vorangehenden Ansprüche.

13. Montage (1) eines motorisierten Schirms, umfassend eine Steuerungseinheit (7) nach vorangehendem Anspruch.

## Claims

1. An operating method of a control unit (7) of an electromechanical actuator (4) for maneuvering a moving screen (2), the control unit comprising a means (14) for determining a risk index related to the maneuvering of the screen (2), the method comprising a first operating mode, called alert mode and at least defined by a condition on the risk index, **characterized in that** the control unit (7) also comprises a means for emitting an alert signal, and **in that**, in the first operating mode, a movement command order of the actuator (4) leads to a reaction by the control unit (7) by providing an alert signal via the emitting means, signifying that the movement command order must be confirmed by the user to be executed by the actuator (4).

2. The operating method according to claim 1, **characterized in that** the control unit (7) switches from a second operating mode to the first operating mode when the risk index crosses a predetermined threshold value.

3. The operating method according to claim 1 or 2, **characterized in that** the risk index is determined based on a measurement of the intensity of an ambient parameter.

4. The operating method according to one of the preceding claims, **characterized in that** the risk index is determined based on a freeze and/or snow and/or frost detection.

5. The operating method according to one of the preceding claims, **characterized in that** the risk index is determined based on a temperature and/or humidity detection.

6. The operating method according to one of the preceding claims, **characterized in that** the alert signal indicates to the user that the emitted movement command order is temporarily unable to be executed.

7. The operating method according to one of the preceding claims, **characterized in that** the confirmation of the movement command order by the user comprises sending a command signal triggered by a first action by the user, this first action being different from a second action triggering the same movement command order when the first operating mode is not active.

8. The operating method according to the preceding claim, **characterized in that** the ergonomics of the first and second actions are different.

9. The operating method according to one of the preceding claims, **characterized in that**, to be taken into account, a confirmation of the movement command order by the user occurs after a predetermined length of time.

10. The operating method according to one of the preceding claims, **characterized in that** upon receiving a confirmation of the movement command order by the user, the control unit processes the latter and causes the associated command to be carried out.

11. The operating method according to one of the preceding claims, **characterized in that** a preventive alert message is emitted when entering the first operating mode.

12. A control unit (7) for an electromechanical actuator (4) for maneuvering a moving screen comprising hardware and/or software means, in particular a means (14) for determining a risk index related to the maneuvering of the screen and a means for emitting an alert signal, carrying out the operating method according to one of the preceding claims.

13. A motorized screen installation (1) comprising a control unit (7) according to the preceding claim.
